# EUROPÄISCHE PATENTSCHRIFT

(11) **EP 0 873 383 B1**
(45) Veröffentlichungstag und Bekanntmachung des Hinweises auf die Patenterteilung: **30.08.2000**
(21) Anmeldenummer: 95935913.4
(22) Anmeldetag: 06.10.1995
(51) Int. Cl.: C10L 5/40

(54) **VERFAHREN ZUR HERSTELLUNG EINES KÖRNIGEN, RIESELFÄHIGEN BRENNSTOFFES**
PROCESS FOR PRODUCING GRANULATED, POURABLE FUEL
PROCEDE DE PRODUCTION DE COMBUSTIBLE GRANULE COULANT

(30) Priorität: 10.08.1995 DE 19529441
(43) Veröffentlichungstag der Anmeldung: 28.10.1998
(73) Patentinhaber: Silogran Trading AG, 8038 Zürich (CH)
(72) Erfinder:
(74) Vertreter: Schneiders, Josef, Dipl.-Ing.
(86) Internationale Anmeldenummer: EP9503952
(87) Internationale Veröffentlichungsnummer: WO9706226

(56) Entgegenhaltungen:
- DE-A- 2 807 076
- DE-A- 2 935 103
- DE-A- 3 619 725

## Beschreibung

Die Erfindung betrifft ein Verfahren zur Herstellung eines körnigen, rieselfähigen Brennstoffes unter Verwendung von brennbaren industriellen Rückständen in flüssiger oder pastöser Form, bei welchem die Rückstände an einen adsorptionsfähigen, ebenfalls brennbaren Trägerstoff gebunden werden. Unter Rückständen in pastöser Form werden hier auch solche Rückstände verstanden, die erst bei erhöhter Temperatur eine pastöse Konsistenz haben.

Verfahren der angegebenen Art sind beispielsweise in der DE PS 29 35 103 beschrieben. Bei den nach dem Stande der Technik bekannten Verfahren werden die in flüssiger oder pastöser Form vorliegenden industriellen Rückstände, nämlich Teerrückstände aus Steinkohle oder Braunkohle, Pechrückstände, Harzrückstände, Ölschlamm, oder dgl. so gut es geht an einen körnigen, brennbaren Trägerstoff angelagert. Der Nachteil bei diesem Verfahren besteht darin, daß viel zu wenig von den flüssigen oder pastösen Abfallstoffen an diese körnigen Träger gebunden werden kann. Ein so hergstellter Brennstoff kann max. 3 bis-5 Gew.-% flüssige oder pastöse Abfälle aufnehmen.

Versucht man, mehr von diese flüssigen oder pastösen Rückständen an die Körner aus brennbarem Material anzulagern, so verkleben die Körner bei der Lagerung oder beim Transport zur Feuerungsanlage, so daß der Brennstoff seine Rieselfähigkeit verliert. Die miteinander verklebten Körner bilden große Aggregate, die die Transportleitungen und Transporteinrichtungen verstopfen und nur mühsam wieder entfernt werden können.

Soll mehr von den flüssigen oder pastösen Rückständen gebunden werden, so muß das Material nach dem Stand der Technik pellitisiert oder brikettiert werden, wozu eine aufwendige Verfahrenstechnik und geeignete Bindemittel bereitgestellt werden müssen.

Es ist deshalb Aufgabe der Erfindung, das Verfahren der eingangs genannten Art dahingehend weiterzubilden, daß es verhältnismäßig große Mengen an industriellen Rückständen in flüssiger oder pastöser Form, nämlich Teerrückstände aus Steinkohle oder Braunkohle, Pechrückstände, Harzrückstände, Ölschlamm oder dergl. binden kann, ohne daß der Brennstoff seine Rieselfähigkeit verliert.

Zur Lösung dieser Aufgabe schlägt die Erfindung ausgehend von dem Verfahren der eingangs genannten Art vor, daß als Trägerstoff Steinkohle, Braunkohle oder Koks verwendet werden, wobei zunächst ein möglichst homogenes Vorgemisch hergestellt wird, welches den zunächst grobkörnig belassenen Trägerstoff und zwischen 5 und 50 Gew.-% der industriellen Rückstände in flüssiger oder pastöser Form enthält, und daß anschließend dieses Vorgemisch einer Zerkleinerung in einer Hammermühle unterzogen wird.

Es hat sich überraschenderweise herausgestellt, daß man bei Verwendung von Kohle als Trägermaterial erheblich größere Mengen an flüssigen oder pastösen Rückständen binden kann, wenn man die Kohle zusammen mit den noch sehr stark klebenden flüssigen oder pastösen Rückständen in eine Hammermühle gibt. In der Hammermühle ergeben sich im wesentlichen drei Effekte, die es möglich machen, die klebrigen, flüssigen oder pastösen Bestandteile in großen Mengen zu binden. Zum einen entstehen bei der Zerkleinerung der Kohle in der Hammermühle an den jeweils frisch freigelegten Bruchflächen große, stark adsorptionsfähige Flächen, an denen sich die flüssigen oder pastösen Rückstände begierig anlagern. Zum anderen entsteht bei der Zerkleinerung der Kohle in einer Hammermühle in großen Mengen feinster Kohlenstaub, der dazu in der Lage ist, die verbleibenden Oberflächen der flüssigen oder pastösen Rückstände nachhaltig zu entkleben. Schließlich ergibt sich unter der mechanischen Einwirkung der Schläger der Hammermühle ein besonders intensiver Kontakt zwischen den Kohlepartikeln und den flüssigen oder pastösen Rückständen, so daß die flüssigen oder pastösen Rückstände besser an den Kohlekörnern haften und sich an der Oberfläche durch eindringende Feinkohlepartikel eine verhältnismäßig dicke, nicht klebende Schicht ergibt. Der so hergestellte Brennstoff steht im Hinblick auf die Rieselfähgkeit einer normalen Steinkohle in nichts nach, obwohl er in großen Mengen industrielle Rückstände in flüssiger oder pastöser Form enthält, die sich sonst praktisch nicht verwerten lassen.

Der nach dem Verfahren gemäß der Erfindung hergestellte Brennstoff kann, wie bereits gesagt, z. B. in Kraftwerken wie normale Kesselkohle verwendet werden, eignet sich aber auch für alle übrigen industriellen Feuerungsanlagen, die mit rieselfähiger Kohle arbeiten, z. B. in Zementwerken, Kalkwerken, Stahlwerken, Kokereien oder anderen chemothermischen Prozessen. Der nach dem Verfahren gemäß der Erfindung hergestellte Brennstoff kann ohne Modifikation über die vorhandenen Brennstoff-Förderwege der Feuerungsanlage zugeführt werden.

Besonders gute Ergebnisse lassen sich erzielen, wenn das Vorgemisch zwischen 10 und 25 Gew.-% der industriellen Rückstände in flüssiger oder pastöser Form enthält. Bei diesem Gehalt an Rückständen verändert sich das Brennverhalten des Brennstoffes gegenüber reiner Kohle nur unwesentlich, so daß es auf diese Weise möglich ist, auch sehr schwierig handhabbare Rückstände zu verwenden. Durch den verbleibenden hohen Kohleanteil kann die Verbrennung nämlich ohne weiteres so geführt werden, daß diese Rückstände gut verbrennen.

Zweckmäßig erfolgt die Zerkleinerung in einer oder mehreren aufeinanderfolgenden Zerkleinerungsstufen bis auf eine Endkörnung von <10 mm. Bei dieser Körnung ergibt sich ein besonders günstiges Verhältnis von anlagerungsfähigen Kohlekörnern einerseits und Feinkohle und Kohlenstaub andererseits. Der so hergestellte Brennstoff zeichnet sich durch eine besonders gute Rieselfähigkeit aus und eignet sich besonders für Schmelzkammer- oder Wirbelschichtfeuerungen.

Zur Verbesserung der Homogenität des erzeugten Brennstoffes kann das Gemisch gegebenenfalls vor oder nach der Zerkleinerung in einem der Zerkleinerungsstufe vor- oder nachgeschalteten Mischer zusätzlich homogenisiert werden.

Eine besonders vorteilhafte Weiterbildung der Erfindung sieht vor, daß dem Vorgemisch zusätzlich verunreinigte Böden, Klärschlamm oder vergleichbare feste oder flüssige Rückstände beigefügt werden.

Auf diese Weise ist es zum Beispiel möglich, dem Brennstoff gemäß der Erfindung den für die jeweilige Feuerung richtigen Aschegehalt zu geben. Bekanntlich benötigt man für Schmelzkammer- bzw. Wirbelschichtfeuerungen verhältnismäßig hohe Aschegehalte im Brennstoff, damit ein stabiles Gleichgewicht im Aschehaushalt der Feuerungsanlagen zu erzielen bzw. beizubehalten ist. Durch das Beimischen von verunreinigten Böden, Klärschlamm oder vergleichbaren Rückständen mit hohen Gehalt an Inertstoffen löst man zugleich das Problem der Verwertung von durch schwere Kohlenwasserstoffe verunreinigten Böden, Klärschlamm oder vergleichbaren Rückständen, die sonst in sogenannten Bodenverbrennungsanlagen oder Klärschlammverbrennungsanlagen beseitigt werden müßten. Für den Brennstoff selbst haben diese Beimischungen den Vorteil, daß sie zusätzlich entklebend wirken, was sich günstig auf die Rieselfähigkeit des Brennstoffes auswirkt. Bei geeigneten Mischungsverhältnissen ist dieser Brennstoff auch für Feuerungsanlagen mit vorgeschalteter Mahltrocknung geeignet.

Falls im zuletzt genannten Fall unnötig viel Wasser und Feuchtigkeit in das System eingeschleppt wird, kann der Brennstoff schließlich noch abschießend vor seiner Verwendung getrocknet werden. Hierdurch wird die unnötige Einschleppung von Wasser in den Verbrennungsprozeß vermieden, die sich energetisch in der Regel nachteilig auswirkt.

Ein Ausführungsbeispiel der Erfindung wird im folgenden anhand des beigefügten Blockdiagrammes näher erläutert. Nach dem Blockdiagram befindet sich grobstückige Steinkohle, Braunkohle oder Koks in einem Kohlebunker 1. Weiterhin befinden sich flüssige oder pastöse industrielle Abfälle, z.B. Teerrückstände, Pechrückstände oder Harzrückstände, in einem Tank oder Behälter 2. Die Kohle aus dem Kohlebunker 1 und die industriellen Rückstände aus dem Tank oder Behälter 2 werden mit geeigneten Fördermitteln einer Mischeinrichtung 3 zugefügt, in der diese Bestandteile vorgemischt werden. Das typische Mischungsverhältnis von Kohle zu flüssigem oder pastösem Rückstand beträgt beispielsweise 4 : 1 bis 10 : 1. Diesem Gemisch wird dann noch aus Vorratsbehältern 4 und 5 in geeigneter Menge verunreinigter Boden oder Klärschlamm zugefügt, die überwiegend aus Inertstoffen bestehen. Die Menge an verunreinigtem Boden oder Klärschlamm wird so groß gewählt, daß in dem Brennstoff ein geeigneter Aschegehalt, beispielsweise ein Aschegehalt von 20 %, eingestellt wird.

Das in der Mischeinrichtung 3 hergestellte weitestgehend homogene Vorgemisch wird sodann in eine Hammermühlenanlage 6 gegeben, die ein- oder zweistufig ausgebildet sein kann und das Vorgemisch bis auf eine Körnung von unter 10 mm zerkleinert. Das so hergstellte und in der Hammermühlenanlage 6 homogenisierte Gemisch wird abschließend einer Trocknungsanlage 7 zugeführt. Der aus der Trocknungsanlage 7 kommende fertige Brennstoff ist wie normale Kohle rieselfähgig und kann in allen normalen industriellen Verbrennungsanlagen verwendet werden.

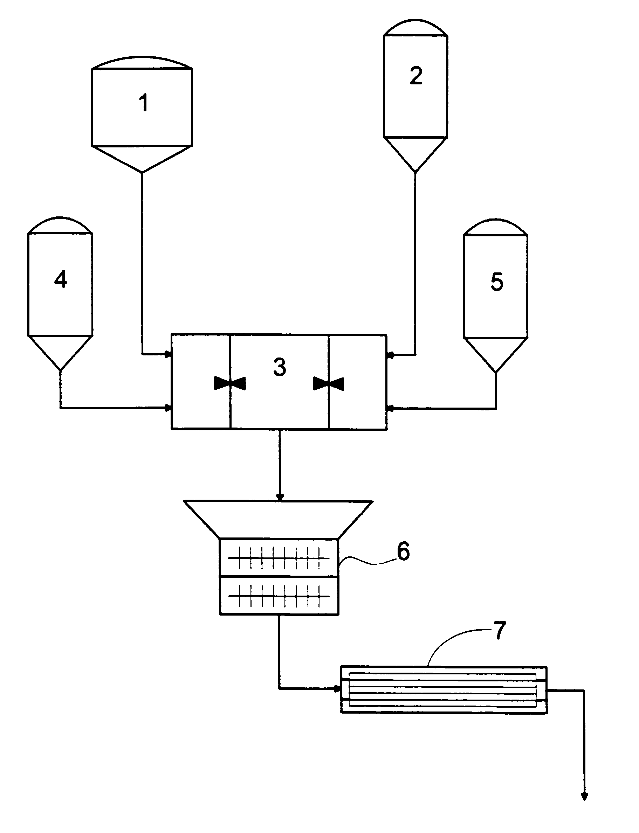

## Patentansprüche

1. Verfahren zur Herstellung eines körnigen, rieselfähigen Brennstoffes unter Verwendung von Kohle, nämlich Steinkohle, Braunkohle oder Koks, und klebenden industriellen Rückständen, die brennbar sind und in flüssiger oder pastöser Form vorliegen, nämlich Teerrückstände Pechrückstände, Harzrückstände, oder Ölschlamm, **dadurch gekennzeichnet,** daß die zunächst grobstückig belassene Kohle mit zwischen 5 und 50 Gew.-% klebenden Rückständen zu einem möglichst homogenen, noch klebenden Vorgemisch vermischt wird und daß anschließend dieses Vorgemisch einer Zerkleinerung in einer Hammermühle unterzogen wird, wobei die Zerkleinerung in einer oder mehreren aufeinanderfolgenden Zerkleinerungsstufen bis auf eine Endkörnung von kleiner als 10 mm stattfindet.

2. Verfahren nach Anspruch 1, dadurch gekennzeichnet, daß das Vorgemisch zwischen 10 und 25 Gew.-% des industriellen Rückstandes in flüssiger oder pastöser Form enthält.

3. Verfahren nach den Ansprüchen 1 und 2, dadurch gekennzeichnet, daß das Vorgemisch vor der Zerkleinerung in einem Mischer homogenisiert wird.

4. Verfahren nach einem der Ansprüche 1 bis 3, dadurch gekennzeichnet, daß der Brennstoff nach der Zerkleinerung in einem Mischer noch einmal homogenisiert wird.

5. Verfahren nach einem der Ansprüche 1 bis 4, dadurch gekennzeichnet, daß dem Vorgemisch zusätzlich verunreinigte Böden, Klärschlamm oder vergleichbare feste Rückstände beigefügt werden.

6. Verfahren nach einem der Ansprüche 1 bis 5, dadurch gekennzeichnet, daß der Brennstoff abschließend vor seiner Verwendung getrocknet wird.

## Claims

1. Method for manufacturing a granular, pourable fuel, using coal, namely hard coal, brown coal or coke, and viscous industrial residues which are combustible and are in liquid or pasty form, namely tar residues, pitch residues, resin residues or oil sludge, characterised in that the coal, which is initially left in coarse pieces, is mixed with between 5 and 50% by weight of viscous residues to form a pre-mix which is as homogeneous as possible, and still sticky, and that subsequently this pre-mix is subjected to comminution in a hammer crusher, wherein the comminution takes place in one or more comminution stages, until there is final granulation of less than 10 mm.

2. Method according to claim 1, characterised in that the pre-mix contains between 10 and 25% by weight of the industrial residue in liquid or pasty form.

3. Method according to claims 1 and 2, characterised in that the pre-mix is homogenised prior to comminution.

4. Method according to one of claims 1 to 3, characterised in that the fuel is homogenised once more in a mixer after comminution.

5. Method according to one of claims 1 to 4, characterised in that contaminated soil, sewage sludge or comparable solid residues are additionally added to the pre-mix.

6. Method according to one of claims 1 to 5, characterised in that the fuel is lastly dried before use.

## Revendications

1. Procédé de fabrication d'un combustible granuleux coulant, en utilisant du charbon, à savoir de la houille, du lignite ou du coke, et des résidus industriels collants qui sont combustibles et qui se présentent sous forme liquide ou pâteuse, à savoir des résidus de goudron, des résidus de poix, des résidus de résine ou de la crasse d'huile, caractérisé en ce que le charbon, d'abord en gros morceaux, est mélangé avec des résidus collants, entre 5 et 50% en poids, en un mélange préalable le plus homogène possible, encore collant, et en ce que ce mélange préalable est soumis ensuite à un fractionnement dans un broyeur à marteaux, où le fractionnement a lieu dans un ou plusieurs étages de fractionnement successifs jusqu'à une granulation finale inférieure à 10 mm.

2. Procédé selon la revendication 1, caractérisé en ce que le mélange préalable contient entre 10 et 25% en poids du résidu industriel sous forme liquide ou pâteuse.

3. Procédé selon les revendications 1 et 2, caractérisé en ce que le mélange préalable est homogénéisé avant le fractionnement dans un mélangeur.

4. Procédé selon l'une des revendications 1 à 3, caractérisé en ce que le combustible, après le fractionnement, est homogénéisé encore une fois dans un mélangeur.

5. Procédé selon l'une des revendications 1 à 4, caractérisé en ce qu'on ajoute au mélange préalable additionnellement des sols souillés, de la boue de clarification ou des résidus solides comparables.

6. Procédé selon l'une des revendications 1 à 5, caractérisé en ce que le combustible est séché enfin avant son utilisation.
